# EUROPÄISCHE PATENTSCHRIFT

(11) **EP 2 154 384 B1**
(45) Veröffentlichungstag und Bekanntmachung des Hinweises auf die Patenterteilung: **08.02.2017**
(21) Anmeldenummer: 09009959.9
(22) Anmeldetag: 01.08.2009
(51) Int. Cl.: F16B 11/00, F16B 37/04, F16B 47/00

(54) **BEFESTIGUNGSELEMENT ZUR ORTSFESTEN ANBRINGUNG VON GEGENSTÄNDEN AN EINER WAND SOWIE VERFAHREN ZUM AUSHÄRTEN EINES HAFT- UND VERBINDUNGSMITTELS, MITTELS WELCHEM DAS BEFESTIGUNGSELEMENT AN DER WAND BEFESTIGT WIRD.**
ATTACHMENT ELEMENT FOR FIXED ATTACHMENT OF OBJECTS TO A WALL AND METHOD FOR HARDENING AN ADHESIVE AND COMPOUND AGENT USED TO ATTACH THE ATTACHMENT ELEMENT TO THE WALL
ELÉMENT DE FIXATION DESTINÉ À L'APPLICATION À POSITION FIXE D'OBJETS SUR UN MUR ET PROCÉDÉ DE DURCISSEMENT D'UN MOYEN D'ADHÉSION ET DE LIAISON, À L'AIDE DUQUEL L'ÉLÉMENT DE FIXATION EST FIXÉ SUR LE MUR

(30) Priorität: 08.08.2008 DE 102008037095
(43) Veröffentlichungstag der Anmeldung: 17.02.2010
(73) Patentinhaber: nie wieder bohren ag, 63450 Hanau (DE)
(72) Erfinder: Braun, Frank, 63584 Gründau (DE)
(74) Vertreter: Weickmann & Weickmann PartmbB

(56) Entgegenhaltungen:
- WO-A1-03/036106
- DE-A- 2 262 513
- DE-A1- 3 723 932
- DE-A1- 10 328 468
- DE-A1- 19 816 478
- DE-A1-102006 054 197
- US-A- 4 421 876
- "CD Römpp Chemie Lexikon - Version 1.0", 1995, Georg Thieme Verlag, Stuttgart / New York

## Beschreibung

### I. Anwendungsgebiet

Die vorliegende Erfindung betrifft ein Befestigungselement zur ortsfesten Anbringung von Gegenständen, wie Handtuchhaltern, Regalen, Leuchten oder dergleichen Ausstattungsartikeln, an einer Wand, Decke, Boden oder dergleichen Fläche, insbesondere in mit Kacheln, Marmorplatten oder mit dergleichen Wandverkleidungen ausgestatteten Räumen. Die Erfindung betrifft des Weiteren ein Montagesystem umfassend die Kombination des Befestigungselements mit einem aushärtbaren Haft- und Verbindungsmittel sowie ein Verfahren zum Aushärten des Haft- und Verbindungsmittels, mittels welchem das Befestigungselement an der Wand, Decke, Boden oder dergleichen befestigt wird.

### II. Technischer Hintergrund

Aus der WO 03/036106 A1 ist bereits ein Befestigungselement der in Rede stehenden Art bekannt. Es umfasst einen Grundkörper, der mit Hilfe eines aushärtbaren Haft- und Verbindungsmittels an der Wand befestigbar ist. Bei dem Haft- und Verbindungsmittel handelt es sich regelmäßig um Klebstoffe, die abhängig von den Umgebungsbedingungen aushärten, wobei die Klebstoffe bis zu 12 Stunden und mehr Zeit zum Aushärten benötigen. Dementsprechend lange dauert es, bis das bekannte Befestigungselement voll belastet werden kann.

Aus der DE 37 23 932 A1 ist ein Verfahren zum Verkleben und Abdichten von wasserdampfundurchlässigen Substraten mit unter Feuchtigkeitseinwirkung nachvernetzenden Schmelzklebstoffen bekannt. Das Verfahren erlaubt es, wasserdampfundurchlässige Substrate fehlersicher mittels der vorgenannten Schmelzkleber zu verkleben. Es wird vorgeschlagen, auf wenigstens eine der zu verklebenden Substratoberflächen ein s.g. Aktivatormaterial zusätzlich aufzubringen, wobei das Aktivatormaterial in ihm gebundenes Wasser zur Nachvernetzung des Schmelzklebers abgeben kann. Das Aktivatormaterial stellt somit ein zusätzliches Hilfsmittel zur Durchführung des Verfahrens dar.

### III. Darstellung der Erfindung

### a) Technische Aufgabe

Es ist daher die Aufgabe der vorliegenden Erfindung, ein Befestigungselement zur ortsfesten Anbringung von Gegenständen an einer Wand, Decke oder Boden, ein Montagesystem umfassend die Kombination des Befestigungselements mit einem aushärtbaren Haft- und Verbindungsmittel sowie ein Verfahren zum Aushärten des Haft- und Verbindungsmittels, mittels welchem das Befestigungselement an der Wand befestigt wird, zu schaffen, mittels welchem auf einfache Art und Weise die Aushärtedauer des Haft- und Verbindungsmittels verkürzt und dadurch die volle Belastbarkeit des Befestigungselements früher erreicht werden kann.

### b) Lösung der Aufgabe

Diese Aufgabe wird mittels eines Befestigungselements, eines Montagesystems bzw. eines Verfahrens mit den Merkmalen der Ansprüche 1, 2 bzw. 4 gelöst. Weitere Ausgestaltungen der vorliegenden Erfindung ergeben sich aus den Unteransprüchen.

Der vorliegenden Erfindung liegt die Erkenntnis zugrunde, dass die verwendeten Haft- und Verbindungsmittel zum Aushärten Feuchtigkeit benötigen, die sie während des Aushärteprozesses aufnehmen. Im Stand der Technik erhält das Haft- und Verbindungsmittel die Feuchtigkeit aus der Umgebungsluft. In Abhängigkeit von der Zusammensetzung des Haft- und Verbindungsmittels sowie von der Höhe der Feuchtigkeit in der Umgebungsluft erfolgt dabei das Aushärten mehr oder weniger langsam.

Erfindungsgemäß wird vorgeschlagen, dem aushärtbaren Haft- und Verbindungsmittel ein Wasserreservoir zur Verfügung zu stellen. Dies bewirkt in vorteilhafter Weise, dass einerseits dem Haft- und Verbindungsmittel mehr Feuchtigkeit als nur die Feuchtigkeit aus der Umgebungsluft zur Verfügung steht und andererseits das Bereitstellen dieser zusätzlichen Feuchtigkeit ohne Verwendung zusätzlicher Wasserbehälter oder dergleichen erreicht werden kann, da der ohnehin vorhandene Grundkörper des Befestigungselements das Wasserreservoir bildet. Das Haft- und Verbindungsmittel nimmt die Feuchtigkeit aus dem Wasserreservoir auf und härtet daher in der Regel schneller aus als dies im Falle der Feuchtigkeitsaufnahme ausschließlich aus der Umgebungsluft der Fall ist.

Erfindungsgemäß ist das Wasserreservoir als chemisches Wasserreservoir ausgebildet. Es liegt in dem Material des Grundkörpers des Befestigungselements chemisch gebundenes Wasser vor, welches das Haft- und Verbindungsmittel bei Kontakt mit dem Grundkörper aufnimmt. Unter chemisch gebundenem Wasser ist in diesem Zusammenhang Kristallwasser aber auch durch chemische Adsorption (Chemisorption) angelagertes Wasser zu verstehen. Das Kristallwasser ist in die chemische Struktur des Grundkörpers eingebaut. Chemisorption ist allgemein eine Anlagerung von Fluiden, wie Wasser, an die Oberfläche von Feststoffen, die chemischen Bindungskräften gleicht. Bei der Chemisorption werden Bindungen zu der Oberfläche geknüpft.

Erfindungsgemäß wird das Wasserreservoir von wenigstens einem Teilbereich des Materials des Grundkörpers selbst gebildet.

### c) Ausführungsbeispiele

Nachfolgend wird eine Ausführungsform der vorliegenden Erfindung beispielhaft anhand der beigefügten Zeichnungen beschrieben. Es zeigen:
- Fig. 1:: Eine Schnittdarstellung eines Grundkörpers einer ersten Ausführungsform des erfindungsgemäßen Befestigungselements;
- Fig. 2:: eine Aufsicht auf den in Fig. 1 gezeigten Grundkörper;
- Fig. 3:: eine Schnittdarstellung eines Grundkörpers einer nicht erfindungsgemäßen Ausführungsform eines Befestigungselements; und
- Fig. 4:: eine Aufsicht auf den in Fig. 3 gezeigten Grundkörper.

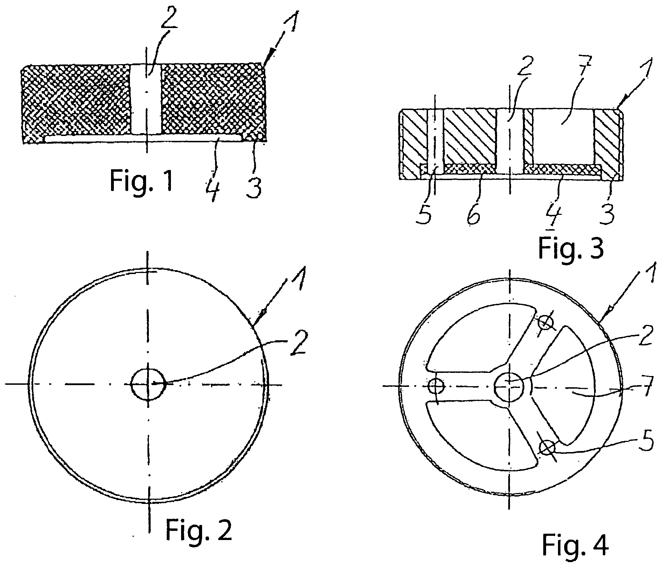

Die Fig. 1 und 2 zeigen eine erste Ausführungsform des erfindungsgemäßen Befestigungselements. Es besteht aus einem kreisrunden Grundkörper 1, der eine mittige Einfüllöffnung 2 zum Einfüllen eines aushärtbaren Haft- und Verbindungsmittels aufweist. In einer alternativen Ausführungsform kann die Einfüllöffnung nicht mittig angeordnet und entsprechend dem Füllgrad optimiert sein. Dieses Haft- und Verbindungsmittel gelangt in die auf der in Fig. 1 unteren Seite des Grundkörpers 1 angeordnete Ausnehmung 4. Mit der in Fig. 1 unten liegenden Rückseite 3 des Grundkörpers 1 wird Letzterer an der Wand befestigt, vorzugsweise geklebt. An seinem Außenumfang ist der Grundkörper 1 mit einem Gewinde versehen, auf welches beispielsweise die in den Fig. 13-15 der WO 03/036106 A1 gezeigten Verschlusselemente aufgeschraubt werden können. An dem in Fig. 13 der WO 03/036106 A1 gezeigten Verschlusselement befindet sich das Element zur Aufnahme des an der Wand zu halternden Gegenstandes.

In weiteren Ausführungsformen kann der Grundkörper neben der kreisrunden Gestaltung auch andere geometrische Formen annehmen und kann die Einfüllöffnung auch an anderer Stelle des Grundkörpers vorgesehen sein.

Auch sind weitere, alternative Ausführungsformen des Befestigungselements denkbar, die von dem oben beschriebenen Ausführungsbeispiel abweichen. Beispielhaft seien folgen Typen genannt:
(i) Befestigungselement mit in den Grundkörper eingepressten Bolzen: Bei diesem Typ werden in Bohrungen des Grundkörpers entweder Bolzen mit Außengewinde oder glatte Bolzen eingepresst, die zur Aufnahme der anzubringenden Teile/Accessoirs dienen.
(ii) Befestigungselement mit in den Grundkörper eingepressten Inserts: Bei diesem Typ werden in Bohrungen des Grundkörpers Inserts mit Innengewinde eingepresst, die zur Aufnahme der anzubringenden Teile/Accessoirs dienen.
(iii) Befestigungselement mit Aufnahmeringen: Bei diesem Typ werden Aufnahmeringe aus Zamak (Zink-Aluminium-Magnesium-Legierung) auf den Grundkörper (z.B. Sintermetallscheibe) genietet.
(iv) Befestigungselement mit Innengewinde: Bei diesem Typ wird das Gewinde direkt in den Grundkörper geschnitten.

Bei der ersten Ausführungsform kann das Material des gesamten Grundkörpers 1 ein nicht von der vorliegenden Erfindung umfasstes physikalisches Wasserreservoir bilden, in welchem physikalisch gebundenes Wasser vorhanden ist. Bei dem Material des Grundkörpers 1 handelt es sich um die oben beschriebenen wasseraufnehmenden Werkstoffe. Diese Materialien wirken besonders vorteilhaft mit den oben beschriebenen Haft- und Verbindungsmitteln zusammen.

Die Fig. 3 und 4 zeigen eine nicht erfindungsgemäße Ausführungsform eines Befestigungselements. Wie bei der ersten Ausführungsform weist auch der kreisrunde Grundkörper 1 der nicht erfindungsgemäßen Ausführungsform eine mittige Einfüllöffnung 2 zum Einfüllen des Haft- und Verbindungsmittels auf.

Im Gegensatz zu der ersten Ausführungsform bildet hier allerdings nicht das Material des gesamten Grundkörpers 1 das Wasserreservoir im Sinne der vorliegenden Erfindung. Stattdessen ist hier ein kreisscheibenförmiger Wasserreservoireinsatz 6 vorgesehen, der in die Ausnehmung 4 eingesetzt ist, welche sich auf der in Fig. 3 unten liegenden Rückseite 3 des Grundkörpers 1 befindet. Ein Teil der Ausnehmung 4 wird somit von dem Wasserreservoireinsatz 6 ausgefüllt, während in den verbleibenden Teil der Ausnehmung 4 das durch die Einfüllöffnung 2 einfüllbare Haft- und Verbindungsmittel gelangen kann. Das Material des separaten Wasserreservoireinsatzes 6 bildet ein physikalisches Wasserreservoir, in welchem physikalisch gebundenes Wasser vorhanden ist.

In an sich bekannter Weise kann überschüssiges Haft- und Verbindungsmittel bei der gezeigten Ausführungsform durch drei Steigöffnungen 5 hindurch abfließen. Darüber hinaus sind ebenso in an sich bekannter Weise in dem Grundkörper 1 drei Durchbrüche 7 vorgesehen, durch welche hindurch beim Aushärten des Haft- und Verbindungsmittels entstehende Gase insoweit austreten können als der Wasserreservoireinsatz 6 für sie durchlässig ist. In einer alternativen Ausführungsform ist auch eine Steigöffnung bei nicht mittig angeordneter Einfüllöffnung denkbar. Auch kann in dem Grundkörper 1 nur ein Durchbruch 7 vorgesehen sein.

Bei dem Material des Grundkörpers 1 sowie des Wasserreservoireinsatzes 6 handelt es sich um die eingangs erwähnten wasseraufnehmenden Werkstoffe, die im Hinblick auf eine größtmögliche Verringerung der Aushärtedauer in besonders vorteilhafter Weise mit dem als Haft- und Verbindungsmittel fungierenden Silikon-Dichtmittel zusammenwirken. Als Verbundwerkstoffe können beispielsweise der von der DuPont AG unter dem Handelsnamen CORIAN ® (Acrylharz mit 67% Aluminiumtrihydroxid; E-Modul: 10 GPa; Biegefestigkeit: 90 MPa) und von der Spektra, ein Unternehmen der Keramag AG, unter dem Handelsnamen VARICOR® (Acrylharz mit 68% Aluminiumtrihydroxid; E-Modul: 10 GPa; Biegefestigkeit: 50 MPa) vertriebene Verbundwerkstoff genannt werden. Als Haft- und Verbindungsmittel kann beispielsweise das von der Henkel KGaA unter dem Handelsnamen Terostat®-MS 9380 vertriebene Silikon-Dichtmittel genannt werden.

Es sind verschiedene Mechanismen denkbar, wie das Wasser aus dem Grundkörper 1 bzw. aus dem Wasserreservoireinsatz 6 freigesetzt und dem Haft- und Verbindungsmittel für dessen Aushärtung zur Verfügung gestellt wird. Hierbei handelt es sich beispielsweise um die allgemein unter dem Begriff Sorption zusammengefassten und dem Fachmann bekannten Vorgänge. Nachfolgend werden beispielhaft einige der denkbaren Mechanismen erläutert.

Das in dem Grundkörper 1 oder dem Wasserreservoireinsatz 6 chemisch gebundene Wasser kann durch chemische Reaktion mit einer Komponente aus dem Haft- und Verbindungsmittel aus dem Grundkörper abgespalten werden. Dies führt zu einer teilweisen Zerstörung des Grundkörpers 1 bzw. des Wasserreservoireinsatzes 6. Besteht der Grundkörper beispielsweise aus den Werkstoffen Corian® oder Varicor®, die Aluminiumtrihydroxid enthalten, ist eine chemische Reaktion des Aluminiumtrihydroxids denkbar, bei der Wasser freigesetzt wird. Aluminiumtrihydroxid kann zum Beispiel mit Protonensäuren reagieren, wobei Wasser und ionische Aluminiumverbindungen entstehen. Bei Verwendung eines Haft- und Verbindungsmittels, welches beim Aushärten Protonensäuren freisetzt, kann die Protonensäure mit dem Aluminiumtrihydroxid reagieren, wobei Wasser gebildet wird, das wiederum für die Aushärtung des Haft- und Verbindungsmittels zur Verfügung steht. Als Protonensäure kommt beispielsweise Essigsäure in Frage, die von Haft- und Verbindungsmitteln in Form von Acetat-Systemen freigesetzt wird. Das für die anfängliche Aushärtungsreaktion erforderliche Wasser wird beispielsweise durch das an der Oberfläche des Grundkörpers 1 bzw. des Wasserreservoireinsatzes 6 durch Physisorption gebundene Wasser bereitgestellt.

Bei der in den Fig. 3 und 4 gezeigten nicht erfindungsgemäßen Ausführungsform ist in dem Grundkörper 1 genau eine Aussparung vorgesehen, in welche der Wasserreservoireinsatz 6 derart aufnehmbar ist, dass das Haft- und Verbindungsmittel zum Aushärten Feuchtigkeit aus dem Wasserreservoir erhalten kann. Alternativ ist denkbar, in der Rückseite 3 des Grundkörpers 1 mehrere kleinere Aussparungen zur Aufnahme jeweils eines scheiben-, quader- oder würfelförmigen Wasserreservoireinsatzes 6 auszubilden. Die mehreren chemischen Wasserreservoireinsätze 6 bestehen dabei aus einem Material, das mit den bei der Aushärtung des wasserhärtenden Haft- und Verbindungsmittels frei werdenden Verbindungen, wie beispielsweise Essigsäure, Alkohole und dergleichen, unter Freisetzung von Wasser reagieren kann. Das dabei entstandene Wasser steht zur weiteren Aushärtung des Haft- und Verbindungsmittels zur Verfügung, wie es bereits im vorhergehenden Absatz beschrieben wurde. Ein entsprechendes Material kann natürlich auch gewählt werden, wenn nur ein einziger Wasserreservoireinsatz 6 vorgesehen wird.

Ist der Grundkörper 1 in nicht erfindungsgemäßer Weise ein physikalisches Wasserreservoir, wird das beim Aushärten des Haft- und Verbindungsmittels erforderliche Wasser durch Desorption des in den Kavitäten des Grundkörpers physikalisch gebundenen Wassers zur Verfügung gestellt. In den Kavitäten bildet sich ein Gleichgewicht zwischen dem adsorbierten und dem desorbierten Wasser, das dampfförmig in den Kavitäten vorliegt. Werden nun die Wassermoleküle an der Kontaktfläche zwischen dem Grundkörper 1 bzw. dem Wasserreservoireinsatz 6 und dem Haft- und Verbindungsmittel durch Reaktion mit dem Haft- und Verbindungsmittel verbraucht, wird das Gleichgewicht in den Kavitäten des Grundkörpers gestört. Durch Desorption gehen erneut Wassermoleküle in die Dampfphase über, bis das Gleichgewicht wieder hergestellt ist. Dadurch stehen an der Kontaktfläche zwischen dem Grundkörper 1 bzw. dem Wasserreservoireinsatz 6 und dem Haft- und Verbindungsmittel wieder Wassermoleküle für die Aushärtung des Haft- und Verbindungsmittels zur Verfügung.

Nicht nur die Wassermoleküle in der Dampfphase stehen zur Aushärtung des Haft- und Verbindungsmittels zur Verfügung, sondern auch die noch adsorbierten Wassermoleküle. Da die Wassermoleküle nur durch Wechselwirkungen an der Oberfläche des Grundkörpers gehalten werden, haben die adsorbierten Wassermoleküle keinen fixen Bindungsort an der Oberfläche, verweilen nicht an der Stelle, wo sie adsorbiert wurden, sondern bewegen sich frei entlang der Oberfläche. Hierbei spricht man von Mobilität. Diese Mobilität erlaubt es, die an der Kontaktfläche zwischen dem Grundkörper 1 bzw. dem Wasserreservoireinsatz 6 und dem Haft- und Verbindungsmittel verbrauchten Wassermoleküle wieder nachzuliefern. Somit stehen weitere Wassermoleküle für die Aushärtungsreaktion des Haft- und Verbindungsmittels an der Kontaktfläche zwischen dem Grundkörper 1 bzw. dem Wasserreservoireinsatz 6 und dem Haft- und Verbindungsmittel zur Verfügung.

Nachdem sich bei der Chemisorption das adsorbierte Wasser trotz einer chemischen Bindung an die Oberfläche des Grundkörpers meist entlang der Oberfläche bewegen kann, ist auch bei der Chemisorption wie bei der Physisorption ein Wassertransport zur Kontaktfläche zwischen dem Grundkörper 1 und dem Haft- und Verbindungsmittel möglich.

### BEZUGSZEICHENLISTE

- 1: Grundkörper
- 2: Einfüllöffnung
- 3: Rückseite des Grundkörpers
- 4: Ausnehmung
- 5: Steigöffnung
- 6: Wasserreservoireinsatz
- 7: Durchbruch

## Patentansprüche

1. Befestigungselement zur ortsfesten Anbringung von Gegenständen, wie Handtuchhaltern, Regalen, Leuchten oder dgl. Ausstattungsartikeln an einer Wand, Decke oder dgl. Fläche, insbesondere in mit Kacheln, Marmorplatten oder mit dgl. Wandverkleidungen ausgestatteten Räumen, wobei das Befestigungselement einen Grundkörper (1) umfasst, der zur Aufnahme eines Elementes zur Halterung des Gegenstandes ausgebildet ist, und wobei der Grundkörper (1) mittels eines feuchtigkeitshärtenden oder -vernetzenden Haft- und Verbindungsmittels an der Wand befestigbar ist,
**dadurch gekennzeichnet, dass**
der Grundkörper (1) wenigstens teilweise derart als Wasserreservoir ausgebildet ist, dass das Haft- und Verbindungsmittel zum Aushärten Feuchtigkeit aus dem Wasserreservoir erhalten kann, so dass der Aushärteprozess beschleunigbar ist, wobei
das Wasserreservoir als chemisches Wasserreservoir ausgebildet ist, in welchem chemisch gebundenes Wasser vorhanden ist.

2. Montagesystem zur ortsfesten Anbringung von Gegenständen, wie Handtuchhaltern, Regalen, Leuchten oder dgl. Ausstattungsartikeln an einer Wand, Decke oder dgl. Fläche, insbesondere in mit Kacheln, Marmorplatten oder mit dgl. Wandverkleidungen ausgestatteten Räumen, umfassend ein Befestigungselement und ein feuchtigkeitshärtenden oder -vernetzenden Haft- und Verbindungsmittel,
**dadurch gekennzeichnet, dass**
es sich bei dem Befestigungselement um ein Befestigungselement nach Anspruch 1 handelt.

3. Montagesystem nach Anspruch 2,
**dadurch gekennzeichnet, dass**
das Haft- und Verbindungsmittel aus der Gruppe bestehend aus Haft- und Verbindungsmitteln auf Polyurethan-, Isocyanat- oder Cyanacrylatbasis, Silikon-Dichtmitteln oder MS-Polymeren ausgewählt ist.

4. Verfahren zum Aushärten eines feuchtigkeitshärtenden oder -vernetzenden Haft- und Verbindungsmittels, mittels welchem ein Befestigungselement zur ortsfesten Anbringung von Gegenständen, wie Handtuchhaltern, Regalen, Leuchten oder dgl. Ausstattungsartikeln an einer Wand, Decke oder dgl. Fläche, insbesondere in mit Kacheln, Marmorplatten oder mit dgl. Wandverkleidungen ausgestatteten Räumen, an der Wand befestigt wird, wobei das Befestigungselement einen Grundkörper (1) umfasst, der zur Aufnahme eines Elementes zur Halterung des Gegenstandes ausgebildet ist,
**dadurch gekennzeichnet, dass**
dem Haft- und Verbindungsmittel zum Aushärten notwendige Feuchtigkeit aus einem Wasserreservoir zur Verfügung gestellt wird, das von dem Grundkörper (1) gebildet wird, wobei
dem Haft- und Verbindungsmittel die Feuchtigkeit aus einem chemischen Wasserreservoir zur Verfügung gestellt wird, in welchem chemisch gebundenes Wasser vorhanden ist.

## Claims

1. Attachment element for fixing in place objects such as towel rails, shelves, lights or similar fittings to a wall, ceiling or similar area, in particular in rooms fitted with tiles, marble tiles or with similar wall coverings, wherein the attachment element comprises a base body (1) which is developed to receive an element to hold the object, and wherein the base body (1) can be attached to the wall by means of a moisture-curing or moisture-crosslinking adhesive and binding agent,
**characterised in that**
the base body (1) is developed at least partially as a water reservoir such that the adhesive and binding agent can receive moisture from the water reservoir for curing so that the curing process can be accelerated, wherein
the water reservoir is developed as a chemical water reservoir in which chemically bound water is present.

2. Assembly system for fixing in place objects such as towel rails, shelves, lights or similar fittings to a wall, ceiling or similar area, in particular in rooms fitted with tiles, marble tiles or with similar wall coverings, comprising an attachment element and a moisture-curing or moisture-crosslinking adhesive and binding agent,
**characterised in that**
the attachment element is an attachment element according to claim 1.

3. Assembly system according to claim 2,
**characterised in that**
the adhesive and binding agent is selected from the group consisting of adhesive and binding agents based on polyurethane, isocyanate or cyanoacrylate, silicone sealants or MS polymers.

4. Method for curing a moisture-curing or moisture-crosslinking adhesive and binding agent, by means of which an attachment element for fixing in place objects such as towel rails, shelves, lights or similar fittings to a wall, ceiling or similar area, in particular in rooms fitted with tiles, marble tiles or with similar wall coverings, is attached to the wall, wherein the attachment element comprises a base body (1) which is developed to receive an element for holding the object,
**characterised in that**
necessary moisture is made available to the adhesive and binding agent for curing from a water reservoir which is formed by the base body (1), wherein
the moisture is made available to the adhesive and binding agent from a chemical water reservoir in which chemically bound water is present.

## Revendications

1. Elément de fixation destiné à la fixation stationnaire d'objets, tels que des porte-serviettes, des étagères, des luminaires ou des articles d'aménagement similaires, sur un mur, un plafond ou une surface similaire, en particulier dans des pièces pourvues de carreaux, de plaques de marbre ou de revêtements muraux similaires, l'élément de fixation comprenant un corps de base (1) qui est conçu pour recevoir un élément destiné au support de l'objet, et le corps de base (1) pouvant être fixé sur le mur au moyen d'un adhésif durcissant sous l'effet de l'humidité ou réticulable par l'humidité,
**caractérisé en ce que**
le corps de base (1) est conçu au moins partiellement comme réservoir d'eau, de façon que l'adhésif puisse puiser de l'humidité dans le réservoir d'eau pour durcir, ce qui permet d'accélérer le processus de durcissement,
le réservoir d'eau étant conçu comme réservoir d'eau chimique, dans lequel il y a de l'eau chimiquement liée.

2. Système de montage destiné à une fixation stationnaire d'objets, tels que des porte-serviettes, des étagères, des luminaires ou des articles d'aménagement similaires, sur un mur, un plafond ou une surface similaire, en particulier dans des pièces pourvues de carreaux, de plaques de marbre ou de revêtements muraux similaires, système de montage comprenant un élément de fixation et un adhésif durcissant sous l'effet de l'humidité ou réticulable par l'humidité,
**caractérisé en ce que**
l'élément de fixation est un élément de fixation suivant la revendication 1.

3. Système de montage suivant la revendication 2,
**caractérisé en ce que**
l'adhésif est sélectionné parmi le groupe constitué d'adhésifs à base de polyuréthane, d'isocyanate ou de cyanoacrylate, de matériaux d'étanchéité au silicone ou de polymères MS.

4. Procédé de durcissement d'un adhésif durcissant sous l'effet de l'humidité ou réticulable par l'humidité, au moyen duquel un élément de fixation destiné à la fixation stationnaire d'objets, tels que des porte-serviettes, des étagères, des luminaires ou des articles d'aménagement similaires, sur un mur, un plafond ou une surface similaire, en particulier dans des pièces pourvues de carreaux, de plaques de marbre ou de revêtements muraux similaires, est fixé au mur, l'élément de fixation comprenant un corps de base (1) qui est conçu pour recevoir un élément destiné au support de l'objet,
**caractérisé en ce que**
l'humidité nécessaire au durcissement est mise à disposition de l'adhésif depuis le réservoir d'eau qui est formé par le corps de base (1),
l'humidité est mise à la disposition de l'adhésif depuis un réservoir d'eau chimique, dans lequel il y a de l'eau chimiquement liée.
